# FASCICULE DE BREVET EUROPEEN

(11) **EP 0 585 176 B1**
(45) Date de publication et mention de la délivrance du brevet: **13.09.1995**
(21) Numéro de dépôt: 93402102.3
(22) Date de dépôt: 26.08.1993
(51) Int. Cl.: C23C 28/02, B32B 15/01

(54) **Revêtement anti-usure au cobalt d'une pièce en alliage de nickel**
Verschleissfeste Beschichtung aus Kobalt für Gegenstände aus Nickel
Wear resistant cobalt coating for nickel substrate

(30) Priorité: 27.08.1992 FR 9210317
(43) Date de publication de la demande: 02.03.1994
(73) Titulaire: EUROPEAN GAS TURBINES SA, F-75116 Paris (FR)
(72) Inventeur: Kerrand, Emmanuel, F-91100 Villabe (FR); Le Castrec, Vincent, F-94220 Charenton le Pont (FR); Boucachard, Didier, F-90000 Belfort (FR)
(74) Mandataire: Vigand, Privat

(56) Documents cités:
- FR-A- 1 222 506
- LU-A- 62 814
- US-A- 5 034 284
- PATENT ABSTRACTS OF JAPAN vol. 4, no. 129 (C-24)(611) 10 Septembre 1980 & JP-A-55 082 773 (HITACHI SEISAKUSHO) 21 Juin 1980

## Description

La présente invention concerne un revêtement d'une pièce en alliage de nickel du type Cr: 15-20%, Co: 8-20%, Mo: 1,5-4%, Ti: 3-5%, Al: 3-3,5%, W: ≦ 3,8%, Fe: ≦ 1,2%, Nb: ≦ 0,9%; C: ≦ 0,1%, B: ≦ 0,O1%, Ta: ≦ 2,8%, le complément étant Ni, ayant une dureté d'environ 400HV comportant plusieurs couches en matériau anti-usure au cobalt du type: C: < 1%, Cr: 26-30%, W: 18-21%, Ni: 4-6%, V: 0,75-1,15%, Fe: ≦ 3%, Mn: ≦ 1%, Si: ≦ 1%, le complément étant Co.

Les pièces à revêtir sont notamment des ailettes de turbines à gaz en particulier leur encoche en forme de Z inversé.

Le dépôt peut se faire par laser comme indiqué dans la demande de brevet français 92-03459 (ou EP-A-0 562 920) au nom de la déposante.

Le dépôt des couches au cobalt entraîne un mélange entre le matériau du substrat et celui du revêtement conduisant à l'évolution d'une zone de faible dureté.

La pièce revêtue selon l'invention permettant de réduire ou de supprimer cette zone est caractérisé en ce qu'entre les couches au cobalt et la pièce est disposée une couche tampon réalisée à partir d'une poudre préalliée de composition suivante: Si: 0,7-2,9%, Cr: 11-26%, Fe: 0,5-3%, C: 0,35-0,85%, B: 0,3-1,35%, Ni: 20-69%, W: 3,6-16,8%, Mn ≦ 0,8%, Co: 7-41,5%.

La présente invention sera mieux comprise à la lumière de la description dans laquelle
La figure 1 représente en coupe transversale le revêtement déposé sur la pièce.
La figure 2 représente en coupe longitudinale II-II le revêtement déposé sur la pièce.
La figure 3 montre l'évolution de la dureté lorsque le revêtement ne comporte pas de couche tampon et lorsque le revêtement comporte une couche tampon selon l'invention.

La constitution de l'alliage en nickel de l'ailette est la suivante: Cr: 14%, Co: 9%, Mo: 5%, Ti: 4,9%, Al: 3%, W: 3,8%, Fe: 0%, Nb: 0%, C: 0,1%, B: 0,01%, Ta: 2,8% le reste en Ni.

Les couches 5', 5'' et suivantes sont à base de cobalt et sont obtenues à partir d'une poudre de composition suivante: Cr: 28%, W: 19,5%, Ni:5%, V: 1%, C: 0,9%, B: 0,05%, Mn:0,5%, le reste en cobalt.

Selon l'invention la première couche déposée 5 est une couche-tampon obtenue à partir d'un mélange de poudres à base Ni et à base Co.

La composition de ce mélange de poudres est la suivante: Si: 2,3%,.Cr: 17,8%, Fe : 2,7%, C: 0,6%, B: 0,85%, W: 10,5%, Mn: 0,5%, Co: 18,2% et le complément en Ni.

La couche 5 suit de préférence le contour de la pièce, les couches 5', 5'' et suivantes sont de préférence planes.

Le revêtement anti-usure est sans fissuration et présente une bonne liaison métallique avec le substrat en alliage de nickel.

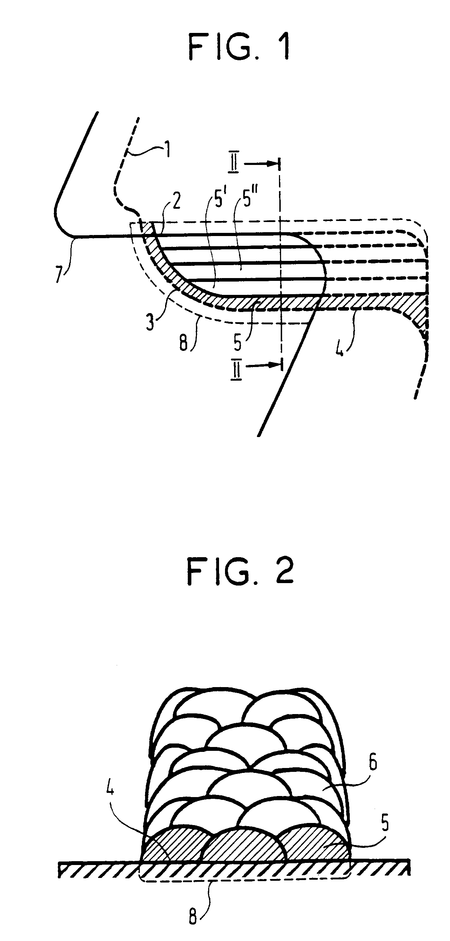

L'ensemble de Z est ensuite réusiné pour obtenir le profil final 7 en trait plein sur la figure 1.

Lors du dépôt de la couche 5 et des suivantes la partie de la pièce en contact avec les couches est affectée et il se produit un mélange entre la matière du substrat et la matière de la couche. La couche du substrat affectée 8 présente une profondeur d'environ 0,2 à 0,5mm et les couches 5, 5', 5'' etc... déposées ont une épaisseur de 0,2 à 0,6mm.

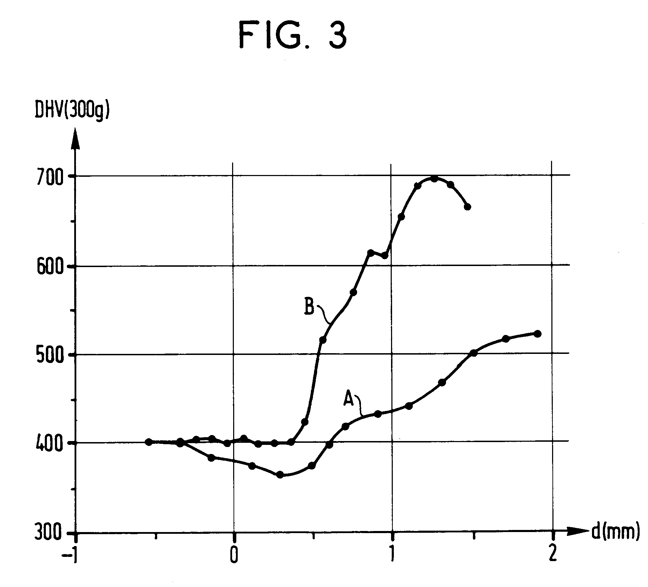

Lorsqu'on analyse la dureté du métal après avoir fait une coupe selon le trait pointillé II-II on obtient les courbes A, B de la figure 3. La courbe A correspondant au cas où la couche 5 est obtenue avec la même poudre au cobalt que les couches suivantes, la courbe B correspond au cas selon l'invention où la couche 5 est une couche tampon.

En abscisse on a indiqué la distance d en mm le point O correspondant à l'entrée dans la couche 8.

En ordonnée on a indiqué la dureté D (HV. sous 300g). On remarque que dans le cas de la courbe A il se produit une baisse de dureté de 400HV à 360HV qui ne se produit pas dans le cas de la courbe B.

## Revendications

1. Pièce en alliage de nickel du type Cr: 15-20%, Co: 8-20%, Mo: 1,5-4%, Ti: 3-5%, Al: 3-3,5%, W: ≦ 3,8%, Fe: ≦ 1,2%, Nb: ≦ 0,9%; C: ≦ 0,1%, B: ≦ 0,01%, Ta: ≦ 2,8%, le complément étant Ni, ayant une dureté d'environ 400HV comportant plusieurs couches (5', 5'') de revêtement en matériau anti-usure au cobalt du type: C: < 1%, Cr: 26-30%, W: 18-21%, Ni: 4-6%, V: 0,75-1,15%, Fe: ≦ 3%, Mn: ≦ 1%, Si: ≦ 1%, B: ≦ 0,05% le complément étant Co, caractérisé en ce qu'entre les couches au cobalt (5', 5'') et la pièce est disposée une couche tampon (5) réalisée à partir d'une poudre préalliée de composition suivante: Si: 0,7-2,9%, Cr: 11-26%, Fe: 0,5-3%, C: 0,35-0,85%, B: 0,3-1,35%, Ni: 20-69%, W: 3,6-16,8%, Mn ≦ 0,8%, Co: 7-41,5%.

2. Pièce selon la revendication 1, caractérisé en ce que la composition de la poudre servant à constituer la couche tampon (5) est la suivante: Si: 2,3%, Cr: 17,8%, Fe : 2,7%, C: 0,6%, B: 0,85%, W: 10,5%, Mn: 0,5%, Co: 18,2% et le complément en Ni.

## Claims

1. A part made of a nickel alloy of the following type: Cr: 15% to 20%, Co: 8% to 20%, Mo: 1.5% to 4%, Ti: 3% to 5%, Al: 3% to 3.5%, W: ≦ 3.8%, Fe: ≦ 1.2%, Nb: ≦ 0.9%, C: ≦ 0.1%, B: ≦ 0.01%, and Ta: ≦ 2.8%, the remainder being Ni, the coating having hardness of about 400 HV and including a plurality of coating layers (5', 5'') of a wear-resistant cobalt-containing material of the following type: C: < 1%, Cr: 26% to 30%, W: 18% to 21%, Ni: 4% to 6%, V: 0.75% to 1.15%, Fe: ≦ 3%, Mn ≦ 1%, Si: ≦ 1%, and B: ≦ 0.05%, the remainder being Co, said coating being characterized in that a buffer layer (5) is disposed between the part and the cobalt-containing layers (5', 5''), which buffer layer is made from a pre-alloyed powder having the following composition: Si: 0.7% to 2.9%, Cr: 11% to 26%, Fe: 0.5% to 3%, C: 0.35% to 0.85%, B: 0.3% to 1.35%, Ni: 20% to 69%, W: 3.6% to 16.8%, Mn ≦ 0.8%, and Co: 7% to 41.5%.

2. A part according to claim 1, characterized in that the composition of the powder used to make the buffer layer (5) is as follows: Si: 2.3%, Cr: 17.8%, Fe: 2.7%, C: 0.6%, B: 0.85%, W: 10.5%, Mn: 0.5%, and Co: 18.2%, the remainder being Ni.

## Patentansprüche

1. Werkstück aus einer Nickellegierung mit 15-20% Cr, 8-20% Co, 1,5-4% Mo, 3-5% Ti, 3-3,5% Al, ≦ 3,8% W, ≦ 1,2% Fe, ≦ 0,9% Nb, ≦ 0 1% C, ≦ 0,01% B, ≦ 2,8% Ta, wobei der Rest Nickel ist und die Härte etwa 400 HV beträgt und wobei dieses Werkstück eine Beschichtung aus mehreren Schichten (5', 5'') eines abriebfesten Materials auf der Basis von Kobalt mit folgender Zusammensetzung enthält: < 1% C, 26-30% Cr, 18-21% W, 4-6% Ni, 0,75-1,15% V, ≦ 3% Fe, ≦ 1% Mn, ≦ 1% Si, ≦ 0,05% B und im übrigen Kobalt, dadurch gekennzeichnet, daß zwischen den Schichten (5', 5'') auf der Basis von Kobalt und dem Werkstück eine Pufferschicht (5) aufgebracht wird, die aus einem vorlegierten Pulver der folgenden Zusammensetzung gebildet wird: 0,7-2,9% Si, 11-26% Cr, 0,5-3% Fe, 0,35-0,85% C, 0,3-1,35% B, 20-69% Ni, 3,6-16,8% W, ≦ 0,8% Mn, 7-41,5% Co.

2. Werkstück nach Anspruch 1, dadurch gekennzeichnet, daß die Zusammensetzung des Pulvers für die Pufferschicht (5) folgendermaßen gewählt ist: 2,3% Si, 17,8% Cr, 2,7% Fe, 0,6% C, 0,85% B, 10,5% W, 0,5% Mn, 18,2% Co, und im übrigen Nickel.
